# EUROPEAN PATENT SPECIFICATION

(11) **EP 1 659 358 B1**
(45) Date of publication and mention of the grant of the patent: **06.03.2013**
(21) Application number: 05110091.5
(22) Date of filing: 27.10.2005
(51) Int. Cl.: F28F 5/02

(54) **Fluid thermoregulated calender cylinder**
Mit einer Flüssigkeit temperierbare Kalenderwalze
Cylindre de calandrage à température réglable avec un fluide

(30) Priority: 19.11.2004 IT VA20040052
(43) Date of publication of application: 24.05.2006
(73) Proprietor: Comerio Ercole S.p.A., 21052 Busto Arsizio (Varese) (IT)
(72) Inventor: Lualdi, Renato, 21052, Busto Arsizio (IT)
(74) Representative: Pellegri, Alberto

(56) References cited:
- EP-A1- 0 428 464
- EP-A1- 0 543 531
- DE-B- 1 151 652
- DE-U1- 9 304 503
- GB-A- 2 121 919
- US-A- 2 902 774
- US-A- 3 208 513
- US-A- 5 725 466

## Description

The present invention relates in general to calenders or similar machines for working continuous ribbons wherein a cylinder surface contacting the treated material in ribbon form of the machine is thermoregulated.

Among common calendering operations may be recalled for example:
- continuous calendering of flat or section ribbons of rubber, plastic, woven or nonwoven textile fabrics, paper and alike materials;
- coupling of one or more tissues or films to form a composite ribbon;
- coupling two or more sheets of rubber or plastic on a woven or nonwoven reinforcement fabric by application of pressure heat and/or adhesive;
- embossing of plastics or woven or unwoven textile fabrics or paper;
- heat cohesion of unwoven teased fibers or monofilaments;
- compaction of unwoven fibers;
- homogenization and compounding of aggregates of different component materials; and alike.

The cylinders of a calendering machine or calender, generally subject to great lamination forces, are often required to function at relatively high temperatures and in this respect, it is necessary to control the superficial temperature of the cylinders, depending on the peculiar requirements of the type of operation being carried out.

A fundamental merit of calendering cylinders is its ability of ensuring the maintaining of a certain surface temperature constantly and uniformly over the whole working surface during operation.

Certain operations are exothermic while others are endothermic, therefore a cylinder may need to be provided with means for removing or injecting heat in order to maintain uniform over the entire working area of the surface of the cylinder and constant the programmed temperature.

Cylinders used in calender are generally made of cast iron or steel starting from castings or forgings, typically massive, that are machined and finished according to the specific requirements of the application.

The massive structure of cylinders is dictated by the intense lamination forces to which they are subject, in order to minimize elastic deflection under load.

The most common approach of manufacturers of cylinders for calenders is that of forming peripheral holes, substantially extending from the whole length of the cylinder, uniformly spaced from one another along a circumference of the cylinder, immediately underneath the outer working surface (table) of the cylinders. The peripheral holes are interconnected among them and, through radially extending holes, with two axially defined chambers or ducts for introducing and recovering a thermal regulation fluid, circulated therethrough.

The distinct inlet and outlet chambers are connected to a thermoregulation unit through a two-stream rotating coupling, commonly installed at one end of the cylinder.

Cylinders of this type are described in US Patent No. 5,383,833 and in the Utility Model DE 9014117.

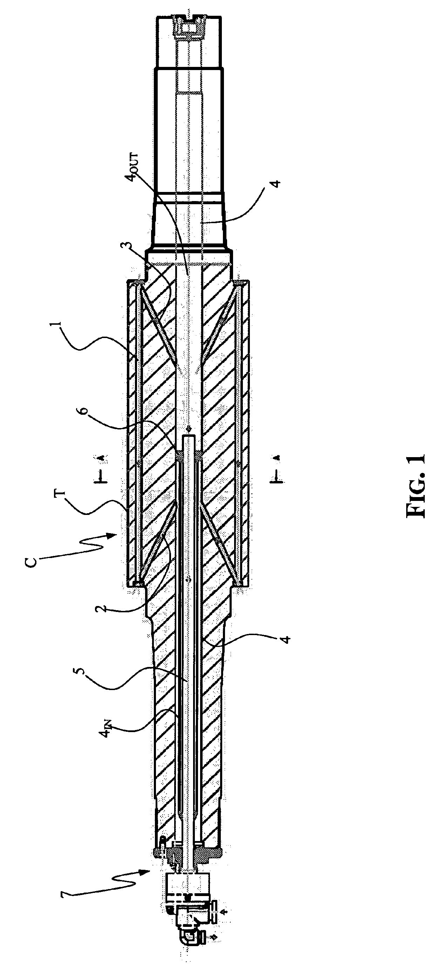

A further example of this type of construction of a thermoregulated calendering cylinder, manufactured by the applicant, is depicted in Figures 1, 2 and 3.

Such a construction is also known from GB 2 121 919.

The longitudinal peripheral holes 1 and the radial inclined holes 2 and 3 of connection to the axial chamber 4 of the cylinder, are made by drilling the bulky original cylinder body. In the axial cavity, indicated as a whole with 4 in the drawings, are defined: a first inlet chamber 4_{IN} of distribution of the fluid and a second outlet chamber 4_{OUT} of collection of the fluid from a discharge pipe 5 that coaxially extends in the chamber 4 for a certain length thereof and that is provided with an end gasket 6 that divide the axial cavity 4 in the two distinct chambers 4_{IN} and 4_{OUT}.

The two distinct chambers are separately connected, through the two-stream rotating coupling 7, to respective common external tubings that connect the chambers to the thermal regulation unit.

Commonly, the peripheral holes 1, through which the thermoregulation fluid circulates, are hydraulically organized in groups, each group composed by a certain number of adjacent holes, for example, in triads of holes, through which the thermoregulating fluid flows in succession (from left to right of the figure, then toward left and again toward right) in order to reduce the number of the inclined radial holes 2 and 3 of connection to the coaxial inlet and distribution chamber 4_{IN} and to the recovery and outlet chamber 4_{OUT} of the circulating fluid.

Though relaying on the good thermo conductivity and large thermal inertia of the metallic bulk of the body of the cylinder, a more effective arrangement for promoting an enhanced uniformity of the temperature over the whole calendering surface of the cylinder, for the same scheme of subdivision by groups of peripheral holes through which the fluid flows in succession in order to limit the total number of inclined holes (radial holes of connection), was devised. The expedient consists in determining that through the peripheral hole adjacent to the peripheral hole of a triad or group of holes from which the thermoregulation fluid exits after having flown sequentially through the preceding peripheral holes of the group or triad, be introduced the fluid that will then flow in succession through the other peripheral holes of the new group or triad.

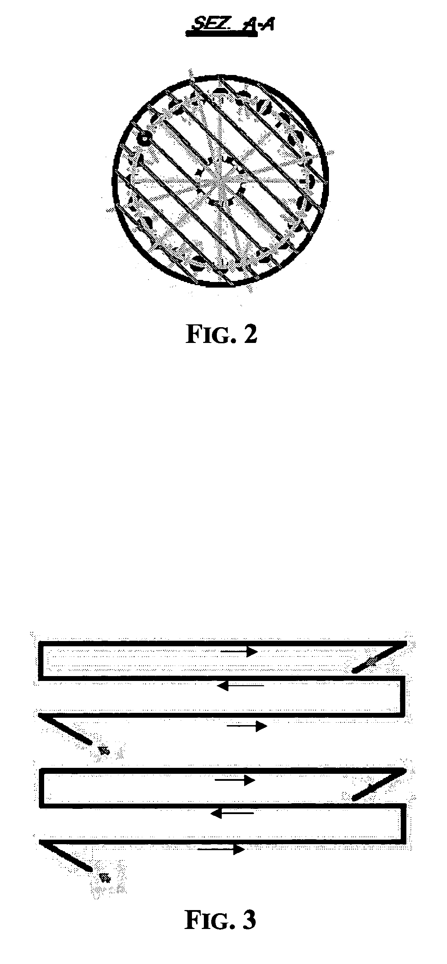

This improved organization is schematically depicted in Figure 3 for a grouping of peripheral holes 1 in groups of three adjacent holes or triads, through the holes of which the thermoregulating fluid is circulated in succession.

As schematically show in Figure 3, the thermoregulating fluid coming from the control unit and reaching the distribution chamber 4_{IN}, enters the first peripheral hole of a triad of adjacent holes at its left end side, flows through it for the whole length thereof, passes into the second peripheral hole of the triad, flows in opposite direction from right to left and then passes into the third and last peripheral hole of the triad, flows again from left to right, for finally being conveyed through the inclined hole of connection into the recovery chamber 4_{OUT} from which it exits the cylinder and returns to the thermal regulation control unit.

Similarly, the thermoregulating fluid from the distribution chamber 4_{IN} enters and flow through the first peripheral hole adjacent to the last peripheral hole of the preceding triads and flows in succession through the peripheral holes of the adjacent triads and so forth.

In this way, conditions are improved for promoting the maintaining of a desirable uniformity of temperature over the whole working surface of the cylinder, because, for example in case heat must be supplied to the cylinder, the fluid enters at its maximum temperature at the left end side of the first peripheral hole of the first triad and progressively cools down to a lower temperature at the outlet of the last peripheral hole of the triads, which will obviously be lower than the inlet temperature. As a matter of fact, along the flow path sequentially through the holes of a triad, then is a progressive drop of the temperature of the heating fluid that must be compensated in a fair measure by closeness of the peripheral longitudinal holes, the heat conductivity and thermal inertia of the metallic material of which the cylinder is made.

The fact of introducing fluid at maximum temperature at the inlet of the first hole of the successive triad of peripheral holes and therefore close to the last peripheral hole of the preceding triads, from which the cooled down fluid exits, attenuates spatial differences of heat input because of the spatial alternation consequent of the subdivision by triads (or even in more numerous groups) of the peripheral holes in which the heating fluid is circulated in succession.

Notwithstanding this expedient and other known techniques as for example those disclosed in the above-identified documents, uniformity of temperature over the whole working surface of the cylinder is hard to ensure under every condition of operation.

As may be easily perceived, the problem is accentuated in case of treatments that imply frequent and irregular or abrupt changes of the thermal parameters of the material being calendered.

More generally, it may be said that meeting ever more stringent specifications in terms of uniformity and constancy of operating temperature under conditions of ample excursions of the thermal parameters that have effects on the actual working temperature, raises problems of not easy solution to the designer of the thermoregulating system.

It has now been found and is the object of the present invention an improved distribution architecture of the thermoregulating fluid of a calendering cylinder of sensibly greater ability of maintaining a constant and uniform temperature over the whole working surface (table) of a calender cylinder.

This important result is achieved by defining three distinct chambers in the axially extending cavity of the cylinder, the middle or central chamber of which (in terms of axial contiguity) constitutes the collecting chamber of the thermal regulating fluid, connected to the exterior through an axial discharge tube. The other two chambers, located on one side and the other side of the central chamber, respectively, distribute the thermoregulating fluid, each chamber to a half of the total number of groups of peripheral holes which are spatially alternated with the groups of peripheral holes of the other half, along the circumference of the cylinder.

Moreover, the thermoregulating fluid, introduced through a two-stream rotating coupling, installed at one end of the cylinder, in a first one of the two distribution chambers reaches also the second distribution chamber by crossing the middle or central collecting chamber of the exiting fluid, through a plurality of pipes that connect the first distribution chamber to the second distribution chamber located at the other side of the common central fluid collection and discharge chamber.

According to this novel architecture devised by the applicant, the points of inlet and of outlet of the thermoregulating fluid to and from two adjacent groups of peripheral holes, alternate at the two opposite ends of the working surface of the cylinder.

Compared to known architectures, in which said inlet and outlet points are all at the same end of the working surface of the cylinder, the novel arrangement enhances the alternation of the spatial distribution (also in a longitudinal or axial direction) of spots of heat input or of heat subtraction by the thermoregulating fluid that is circulated through the peripheral holes of the cylinder. This has been found to determine a more effective thermoregulation in terms of uniformity and constancy of the controlled temperature of the working surface of the cylinder.

According to a preferred embodiment, a rotatable flange with holes may be present to provide a "shutter" function in order to reduce the size of the total flow orifice of the fluid exiting the plurality of tubes to enter the second distribution chamber. By trimming the angular position of the rotatable shutter flange, the thermal inputs that are established through the second half of groups of peripheral holes, alternated to the groups of the first half of groups of peripheral holes, may be attenuated by reducing the flow rate of the thermoregulating fluid through the peripheral holes of the second half of groups of holes alternated to the groups of holes of the first half which, by contrast, are fed with the thermoregulating fluid through the first inlet and distributing chamber.

According to this embodiment, a further contribution to the effectiveness of the thermoregulation is given by the possibility of regulating the thermal input by rotating the shutter flange to reduce the flow rate of the thermoregulating fluid through the second distribution chamber. The regulation is implemented by modifying (reducing) the total flow orifice area to decrease the flow rate and therefore the thermo input contribution provided through the relative half of the total number of groups of peripheral holes, spatially alternated to the groups of peripheral holes of the other half.

This possibility of adjusting the flow rate of the thermoregulating fluid through half of the total number of groups of peripheral holes alternately arranged with the groups of peripheral holes of the other half, provides a useful additional implement of regulation that expands and makes more effective the action of the control unit. Changing the relative position of the rotatable shutter flange, the conditions of thermal input distribution are more flexibly adapted to the type of calendering work to be performed.

In the present context, the expression "thermal input" is intended to refer to the case in which heat is being injected in the cylinder (heating fluid = positive thermal input) as well as to the case in which heat is being subtracted from the cylinder (refrigerating fluid = negative thermal input).

The invention is defined in the annexed claims.

**Figures 1****,** **2** and **3****,** as already discussed above, depict a longitudinal cross section, a transversal cross section and the organization scheme of the flow of the thermoregulating fluid in alternated groups of peripheral holes, according to the prior art.

**Figures 4****,** **5** and **6** depict a longitudinal cross section, a transversal cross section and the organization scheme of the flow of the thermoregulating fluid in alternated groups of peripheral holes, according to the architecture of the present invention.

**Figure 7** is a detailed cross sectional view showing the constitution of the two distinct distribution chambers of the thermoregulating fluid separated by a common collecting chamber of thermoregulating fluid outlet from the cylinder.

**Figure 8** shows the throttling of the flow orifices of the thermoregulating fluid entering the second distribution chamber, depending on the position assumed by the rotatable shutter flange.

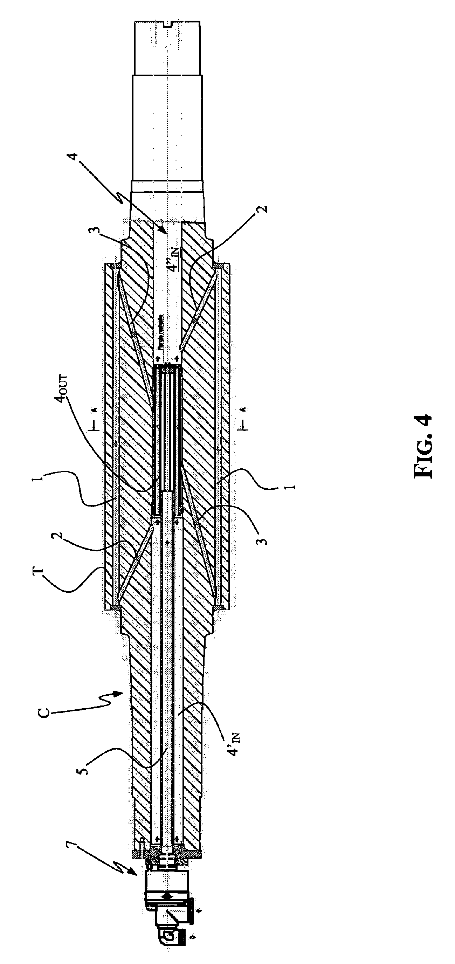

The novel architecture of this invention is depicted in Figures 4-8.

In order to render more evident the structural characteristics of this invention, in Figures 4, 5 and 6 and subsequent figures, the parts and details that, from a general functional point of view may be considered analog to the parts and details of a prior art architecture shown in Figures 1, 2 and 3, are indicated with the same identification symbols (number or letter).

As may be observed, differently from the known solutions, the novel architecture rests on defining within the axial cavity 4 of the cylinder, three distinct chambers, indicated with 4'_{IN}, 4_{OUT} and 4"_{IN}, respectively, by the presence of two annular walls, provided of respective annular gaskets 6 and 8, for example of the "O-ring" type, of an elastomer resistant to the contact with the heating/refrigerating fluid at the contemplated operation temperatures.

Similarly to the known structure of Figure 1, the chamber 4_{OUT} of collection of the thermoregulating fluid about to leave the cylinder to return to the hydraulic control unit, is connected to the central duct of a common double flow rotating coupling 7, installed at one end of the cylinder, through an axial discharge tube 5 of the fluid.

The first distribution chamber 4'_{IN} of the thermal-regulating fluid entering the cylinder, fed through the annular flow duct of the double flow rotating coupling 7, communicates with the other distribution chamber 4"_{IN}, defined on the other side of the intermediate chamber 4_{OUT}, through a nest of tubes 9, assembled through the two annular walls that define the intermediate chamber 4_{OUT}.

As schematically illustrated in Figures 4, 6 and 7, the distinct triads of peripheral holes 1 through which the thermoregulating fluid flows in succession, are alternately supplied with the inlet fluid from the first distribution chamber 4'_{IN}, and by the second distribution chamber 4"_{IN}, through radially inclined holes 2 that connect to the first peripheral longitudinal hole of the respective triads of holes, alternately in correspondence of one and of the other side of the working surface T of the cylinder.

Similarly, the respective discharge holes 3 of the fluid from the last longitudinal peripheral hole of the distinct triads of holes, which the respective peripheral last holes of the triads alternately at one side and at the other side of the working surface T of the cylinder to the common fluid collecting chamber 4_{OUT}. The discharge radially inclined holes have a reduced angle of inclination angle compared to the inclination of the fluid inlet holes 2, for connecting to the intermediate chamber 4_{OUT}, of collection of the fluid exiting the cylinder through the axial tube 5 and the double flow rotating coupling 7.

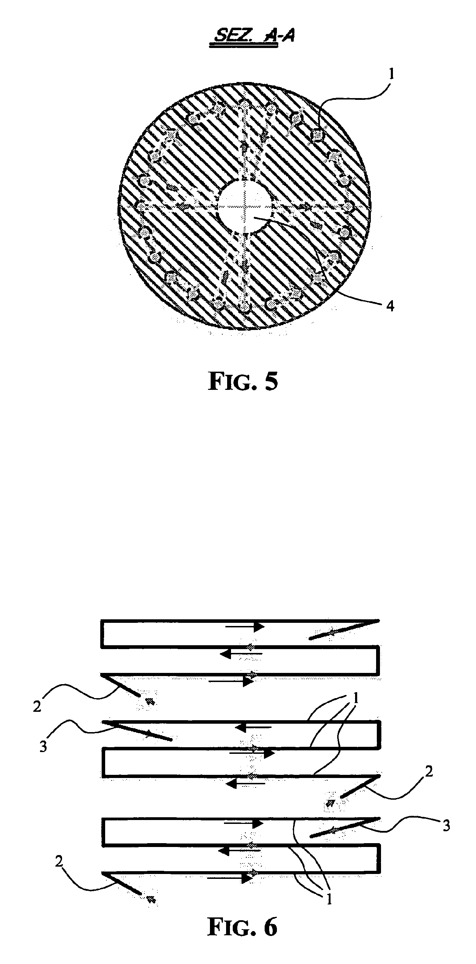

As may be observed from the scheme of Figure 6, the inlet spots, at the merging point of the inclined radial hole 2 with the respective first peripheral hole of the distinct triads, beside being spatially adjacent to the outlet spots at the merging point of the inclined radial hole 3 with the respective last peripheral hole of the adjacent triad of peripheral holes, these paired spots of inlet and outlet of the thermoregulating fluid (at different temperatures), in proximity of the outer working surface T of the cylinder, are alternately localized at one and at the other side of the working surface T.

This arrangement is sensibly more effective in ensuring the best uniformity of temperature over the whole working surface of the cylinder, by associating to a spatial closeness of the points of largest difference of temperature of the thermoregulating fluid in circulation, that is of an inlet point of the fluid in the first of a certain group of peripheral holes, to the point of outlet of hte fluid from the last of a group of peripheral holes adjacent to the first group, also an alternation of these pairs of inlet-outlet points at one end and at the other end of the outer cylindrical working surface of the cylinder. In practice, the structural distribution of spots contacted by the circulating fluid at inevitably different temperatures is more effectively smoothed by virtue of the relatively high thermal conductivity of the metal with which the cylinder is made and its relatively large thermal inertia.

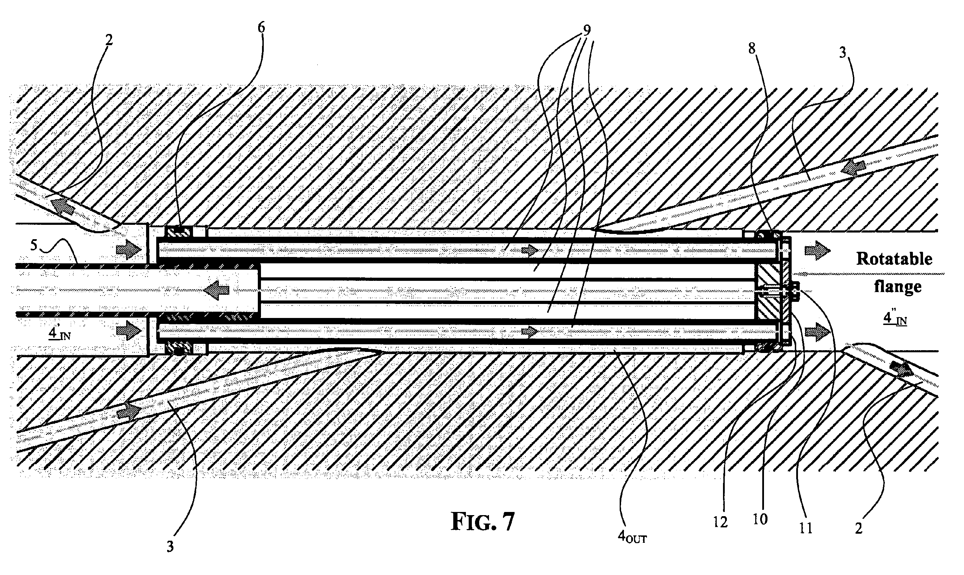

The enlarged detail view of Figure 7, makes more easily readable the distribution and circulation circuit of the thermoregulating fluid according to the present invention. In this figure, the constitution of an auxiliary regulation device according to a preferred embodiment of this invention is highlighted.

According to this optional embodiment, the presence of a shutter flange 10, rotatable around a central pivot 11 is contemplated. The shutter flange has through holes 12 coinciding (when so aligned) with the mouths of the tubes 9 of the nest that connects the first distribution chamber 4'_{IN} to the second distribution chamber 4"_{IN}, defined at opposite sides, respectively, of the common intermediate collecting chamber 4_{OUT} of the fluid exiting the cylinder.

The presence, according to this embodiment, of such a flange 10, provides the function of a flow orifice shutter that, under particular conditions, may be useful for improving the thermoregulation of the working surface of the cylinder.

By modifying the angular position of the shutter flange 10, the rate of distribution of the thermoregulating fluid to half of the total number of distinct, alternately disposed groups (triads in the shown examples) of peripheral holes, may be throttled as far as to practically block distribution of fluid through this half of groups of peripheral holes.

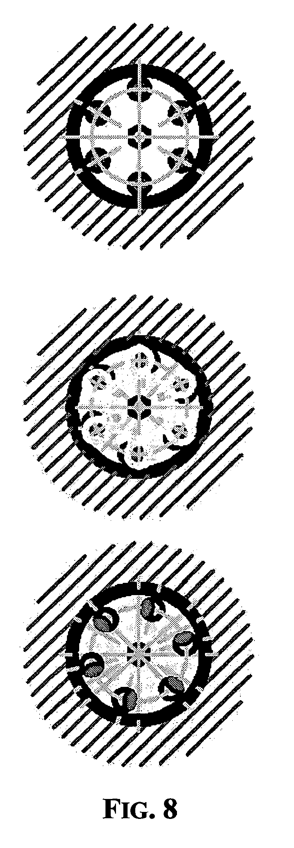

The views of Figure 8 show the manner in which the flow orifice of the thermoregulating fluid entering the second distribution chamber 4"_{IN}, may be progressively reduced by rotating the shutter flange 10, thus progressively obstructing the flow passages through the shutter flange from the six tubes 9 that compose the nest of tubes connecting the first distribution chamber 4'_{IN} to the second distribution chamber 4"_{IN}, defined in the axial cavity of the cylinder according to the present invention.

Of course, the presence of such a mechanical regulation device of the flow of the thermoregulating fluid through half of the groups of longitudinal peripheral holes is not strictly necessary, though offering, if present, useful auxiliary means of regulation for more easily optimize the thermoregulation as controlled by the external control unit, adapting the system to particular working conditions of the calender.

The discharge tube 5, as well as the nest of tubes 9 are preferably made of a material of relatively low heat conductivity, for example of a plastic material, in order to limit the heat exchange between the streaming inlet fluid and outlet fluid.

## Claims

1. A calender cylinder (c) having a working surface (T) thermoregulated by circulating a thermoregulating fluid through a plurality of peripheral (1) holes parallel to the cylinder's axis, uniformly distributed on a circumference, and organized in groups of a certain number of adjacent holes (1) through which said thermoregulating fluid flows in succession, inclined radial holes (2, 3) connecting a first peripheral hole (1) ) of one group and the last peripheral hole (1) of the same group to a fluid distribution chamber (4 iN) and to a fluid collection chamber (4OUT), respectively, defined in an axial cavity (4) of the cylinder (c) and connected through a double flow rotating coupling (7) installed at one end of the cylinder (C) and through common external tubings, to delivery and return couplings, respectively, of a hydraulic thermoregulation central unit, **characterized in that**
in said axial cavity (C) of the cylinder (C) two distinct inlet fluid distribution chambers (4'IN ; 4"IN) are defined, at one side and at the other side, respectively, of a common chamber of collection (4OUT) of the fluid exiting the cylinder (C);
the first peripheral hole (1) of one group is connected to one of said two distinct fluid feed distribution chambers (4 IN) of the fluid entering the cylinder (C) through a respective inclined radial hole (2) merging with said first peripheral hole (1) at one side of the working surface (T) of the cylinder (C), and the first peripheral hole (1) of the next group of holes (1) is connected to the other of said two distinct distribution chambers (4iN) of the fluid entering the cylinder (C) through an inclined radial hole (2) merging with said first peripheral hole (1) at said other side of the working surface (T) of the cylinder (C);
the last peripheral hole (1) of each group of holes (1) is connected through an inclined radial hole (3) having an angle of inclination smaller than the angle of inclination of said fluid feed radial holes (2) and alternately for the distinct groups, at one side and at the other side of the working surface (T) of the cylinder (C), to said common chamber of collection (4OUT) of the thermoregulating fluid exiting the cylinder (C).

2. The cylinder (C) according to claim 1, wherein the thermoregulating fluid entering the cylinder (C) and introduced in a first distribution chamber (4iN) adjacent to the end of the cylinder (C) onto which said double flow rotating coupling (7) is mounted, reaches the other distribution chamber (4iN) by flowing through a nest of tubes (9) that span across said common chamber of collection (4OUT) of the thermoregulating fluid exiting the cylinder (C).

3. The cylinder (C) according to claim 2, further comprising a rotatable multi hole shutter flange for reducing the flow orifice of the thermoregulation fluid emerging from the tubes (9) of said nest of tubes (9) for entering said second distribution chamber.

4. The cylinder (C) according to anyone of the preceding claims, wherein said parallel peripheral holes (1) are organized in groups of three holes (1) through which the thermoregulating fluid flows in series.

5. The cylinder (C) according to claim 2, wherein the tubes (9) of said nest of tubes (9) are of a material with a relatively low heat conductivity.

## Patentansprüche

1. Kalanderwalze (C) mit einer Arbeitsfläche (T), die durch Umwälzen einer Thermoregulationsflüssigkeit durch mehrere zur Zylinderachse parallele Umfangslöcher (1) thermogeregelt wird, die auf einem Umfang gleichmäßig verteilt und in Gruppen einer bestimmten Anzahl benachbarter Löcher (1) organisiert sind, durch die nacheinander die Thermoregulationsflüssigkeit fließt, geneigten radialen Löchern (2, 3), die ein erstes Umfangsloch (1) einer Gruppe und das letzte Umfangsloch (1) derselben Gruppe mit einer Flüssigkeitsverteilungskammer (4_{IN}) bzw. mit einer Flüssigkeitssammelkammer (4_{OUT}) verbinden, die in einem axialen Hohlraum (4) des Zylinders (C) definiert sind und durch eine Zweistromdrehkupplung (7), die an einem Ende des Zylinders (C) angebracht ist, und durch gemeinsame externe Rohrleitungen mit Zufuhr- bzw. Rückleitungskupplungen einer Hydraulikthermoregulationszentraleinheit verbunden sind, **dadurch gekennzeichnet, daß**
im axialen Hohlraum (4) des Zylinders (C) auf einer Seite bzw. auf der anderen Seite einer gemeinsamen Sammelkammer (4_{OUT}) der Flüssigkeit, die aus dem Zylinder (C) austritt, zwei unterschiedliche Einlaßflüssigkeitsverteilungskammern (4'_{IN}, 4''_{IN}) definiert sind;
das erste Umfangsloch (1) einer Gruppe mit einer der beiden unterschiedlichen Flüssigkeitszufuhrverteilungskammern (4_{IN}) der Flüssigkeit, die in den Zylinder (C) eintritt, durch ein jeweiliges geneigtes radiales Loch (2) verbunden ist, das sich mit dem ersten Umfangsloch (1) auf einer Seite der Arbeitsfläche (T) des Zylinders (C) vereinigt, und das erste Umfangsloch (1) der nächsten Gruppe von Löchern (1) mit der anderen der beiden unterschiedlichen Verteilungskammern (4_{IN}) der Flüssigkeit, die in den Zylinder (C) eintritt, durch ein geneigtes radiales Loch (2) verbunden ist, das sich mit dem ersten Umfangsloch (1) auf der anderen Seite der Arbeitsfläche (T) des Zylinders (C) vereinigt;
das letzte Umfangsloch (1) jeder Gruppe der Löcher (1) durch ein geneigtes radiales Loch (3), das einen Neigungswinkel aufweist, der kleiner als der Neigungswinkel der radialen Flüssigkeitszufuhrlöcher (2) ist, und abwechselnd für die unterschiedlichen Gruppen, auf einer Seite und auf der anderen Seite der Arbeitsfläche (T) des Zylinders (C) mit der gemeinsamen Sammelkammer (4_{OUT}) der Thermoregulationsflüssigkeit verbunden ist, die aus dem Zylinder (C) austritt.

2. Zylinder (C) nach Anspruch 1, wobei die Thermoregulationsflüssigkeit, die in den Zylinder (C) eintritt und in eine erste Verteilungskammer (4_{IN}) eingeleitet wird, die dem Ende des Zylinders (C) benachbart ist, an dem die Zweistromdrehkupplung (7) angebracht ist, die andere Verteilungskammer (4_{IN}) erreicht, indem sie durch ein Nest von Röhren (9) fließt, die sich über die gemeinsame Sammelkammer (4_{OUT}) der Thermoregulationsflüssigkeit erstrecken, die aus dem Zylinder (C) austritt.

3. Zylinder (C) nach Anspruch 2, der ferner einen drehbaren Mehrlochverschlußflansch zum Reduzieren der Durchflußöffnung der Thermoregulationsflüssigkeit aufweist, die aus den Röhren (9) des Nests von Röhren (9) austritt, um in die zweite Verteilungskammer einzutreten.

4. Zylinder (C) nach einem der vorhergehenden Ansprüche, wobei die parallelen Umfangslöcher (1) in Gruppen von drei Löchern (1) organisiert sind, durch die die Thermoregulationsflüssigkeit der Reihe nach fließt.

5. Zylinder (C) nach Anspruch 2, wobei die Röhren (9) des Nests von Röhren (9) aus einem Material mit einer verhältnismäßig niedrigen Wärmeleitfähigkeit bestehen.

## Revendications

1. Cylindre de calandrage (C) comportant une surface de travail (T) thermorégulée par la circulation d'un fluide de thermorégulation à travers une pluralité de trous périphériques (1) parallèles à l'axe du cylindre, distribués uniformément sur une circonférence, et organisés en groupes d'un certain nombre de trous adjacents (1) à travers lesquels le fluide de thermorégulation s'écoule successivement, des trous radiaux inclinés (2, 3) connectant un premier trou périphérique (1) d'un groupe et le dernier trou périphérique (1) du même groupe à une chambre de distribution de fluide (4IN) et à une chambre de collecte de fluide (40UT), respectivement, définies dans une cavité axiale (4) du cylindre (C) et connectées par un couplage rotatif à double flux (7) installé au niveau d'une extrémité du cylindre (C) et, par l'intermédiaire de tuyaux externes communs, à des couplages de fourniture et de retour, respectivement, d'une unité centrale de thermorégulation hydraulique, **caractérisé en ce que** :
dans la cavité axiale (4) du cylindre (C) deux chambres d'entrée de distribution de fluide distinctes (4'IN, 4"IN) sont définies, au niveau d'un côté et de l'autre côté, respectivement, d'une chambre commune de collecte (40UT) du fluide sortant du cylindre (C) ;
le premier trou périphérique (1) d'un groupe est connecté à l'une des deux chambres distinctes de distribution d'alimentation de fluide (4IN) du fluide pénétrant dans le cylindre (C) par un trou radial incliné (2) respectif fusionnant avec le premier trou périphérique (1) au niveau d'un côté de la surface de travail (T) du cylindre (C), et le premier trou périphérique (1) du groupe suivant de trous (1) est connecté à l'autre des deux chambres de distribution distinctes (4IN) du fluide pénétrant dans le cylindre (C) par un trou radial incliné (2) fusionnant avec le premier trou périphérique (1) au niveau de l'autre côté de la surface de travail (T) du cylindre (C) ;
le dernier trou périphérique (1) de chaque groupe de trous (1) est connecté par l'intermédiaire d'un trou radial incliné (3) ayant un angle d'inclinaison plus petit que l'angle d'inclinaison des trous radiaux d'alimentation en fluide (2) et de façon alternée pour les groupes distincts, au niveau d'un côté et de l'autre côté de la surface de travail (T) du cylindre (C), à la chambre de collecte commune (40UT) du fluide de thermorégulation sortant du cylindre (C).

2. Cylindre (C) selon la revendication 1, dans lequel le fluide de thermorégulation, pénétrant dans le cylindre (C) et introduit dans une première chambre de distribution (4IN) adjacente à l'extrémité du cylindre (C) sur laquelle est monté le couplage rotatif à double flux (7), atteint l'autre chambre de distribution (4IN) en s'écoulant par un faisceau de tubes (9) qui s'étend à travers la chambre de collecte commune (40UT) du fluide de thermorégulation sortant du cylindre (C).

3. Cylindre (C) selon la revendication 2, comprenant en outre une bride d'obturation multi-trou rotative pour réduire l'orifice d'écoulement du fluide de thermorégulation sortant des tubes (9) du faisceau de tubes (9) pour pénétrer dans la deuxième chambre de distribution.

4. Cylindre (C) selon l'une quelconque des revendications précédentes, dans lequel les trous périphériques parallèles (1) sont organisés en groupes de trois trous (1) à travers lesquels le fluide de thermorégulation s'écoule en série.

5. Cylindre (C) selon la revendication 2, dans lequel les tubes (9) du faisceau de tubes (9) sont en un matériau ayant une conductivité thermique relativement faible.
